# FASCICULE DE BREVET EUROPEEN

(11) **EP 2 483 056 B1**
(45) Date de publication et mention de la délivrance du brevet: **26.07.2017**
(21) Numéro de dépôt: 10774245.4
(22) Date de dépôt: 27.09.2010
(51) Int. Cl.: B29C 65/48, B29C 65/72, B29C 65/50, B29C 65/58

(54) **PROCÉDÉ D'ASSEMBLAGE D'UNE PIÈCE POUR VÉHICULE AUTOMOBILE**
VERFAHREN ZUR MONTAGE EINES TEILS EINES AUTOMOBILS
METHOD FOR ASSEMBLING A PART FOR AN AUTOMOBILE

(30) Priorité: 28.09.2009 FR 0956705
(43) Date de publication de la demande: 08.08.2012
(73) Titulaire: Compagnie Plastic Omnium, 69007 Lyon (FR)
(72) Inventeur: DESBOIS, Brice, F-26600 Tain l'Hermitage (FR); GONNET, Christophe, F-42520 Roisey (FR)
(74) Mandataire: Descazeaux, Charles
(86) Numéro de dépôt international: PCT/FR2010/052026
(87) Numéro de publication internationale: WO 2011/036425

(56) Documents cités:
- DE-A1- 19 800 035
- JP-A- 2008 273 053
- US-A- 3 093 847
- US-A- 3 784 235
- US-A1- 2007 183 273

## Description

La présente invention concerne le domaine technique des pièces pour véhicule. Elle s'applique, sans s'y restreindre, aux véhicules automobiles ou encore aux véhicules de type poids lourd.

On connait de l'état de la technique un procédé d'assemblage de deux pièces l'une avec l'autre dans une installation de collage (voir par exemple JP2008273053). L'installation comprend un support de positionnement d'une des pièces par rapport à l'autre comprenant deux parties métalliques de maintien de chaque pièce. L'installation comprend également des moyens de chauffage de chaque partie. Par conduction thermique, chaque partie métallique chauffe la pièce qu'elle maintient.

Avant de positionner les deux pièces l'une par rapport à l'autre, on applique un cordon d'une colle thermodurcissable sur l'une et/ou l'autre des pièces à assembler. Puis, on rapporte et on positionne les pièces l'une par rapport à l'autre. Ensuite, on chauffe les pièces grâce aux moyens de chauffage afin d'activer la colle thermodurcissable. Enfin, on extrait la pièce assemblée de l'installation.

L'activation de la colle thermodurcissable nécessite de chauffer les pièces pendant un certain temps. Pendant ce temps, l'installation est occupée ce qui constitue un temps mort dans le procédé de fabrication de la pièce. Le procédé d'assemblage de l'état de la technique engendre donc une perte, dite capacitaire, de la capacité de l'installation à assembler des pièces.

En outre, le chauffage des pièces engendre un coût énergétique important.

Enfin, les moyens de chauffage de l'installation rendent celle-ci coûteuse et encombrante.

L'invention a pour but de fournir un procédé permettant de diminuer la perte capacitaire du procédé.

A cet effet, l'invention a pour objet un procédé d'assemblage d'une pièce assemblée pour véhicule automobile à partir de première et deuxième pièces, **caractérisé en ce que**:
- on munit au moins l'une des première et deuxième pièces d'une colle de solidarisation avec l'autre pièce d'un premier type, activée sous l'effet d'au moins une première condition prédéterminée,
- on munit au moins l'une des première et deuxième pièces d'une colle de solidarisation avec l'autre pièce d'un second type, distincte de la colle du premier type, et activée sous l'effet d'au moins une deuxième condition prédéterminée différente de la première condition prédéterminée,
- puis, on assemble les première et deuxième pièces grâce à la colle du premier type en exposant les première et deuxième pièces à la première condition prédéterminée de façon à définir une position relative des première et deuxième pièces l'une par rapport à l'autre dans la pièce assemblée, et en l'absence de la deuxième condition prédéterminée, et
- on expose les première et deuxième pièces assemblées à la deuxième condition prédéterminée.

Le procédé selon l'invention permet de diminuer la perte capacitaire du procédé. En effet, la colle du premier type permet de solidariser les pièces l'une à l'autre en les exposant uniquement à la première condition prédéterminée. Cette première solidarisation ayant uniquement pour but de définir une position relative des pièces l'une par rapport à l'autre dans la pièce assemblée, c'est-à-dire de figer la géométrie de la pièce assemblée, elle n'a pas besoin d'être durable ou très résistante. Une fois, la géométrie de la pièce assemblée figée, on peut extraire la pièce assemblée de l'installation et assembler une autre pièce. Ainsi, on peut s'affranchir d'exposer les pièces à des conditions entrainant une occupation inutile de l'installation et donc une perte capacitaire. L'exposition des première et deuxième pièces à la deuxième condition prédéterminée permet de solidariser définitivement les pièces l'une à l'autre de façon durable et résistante.

En outre, dans le cas où la deuxième condition prédéterminée comprend l'apport de calories, l'installation d'assemblage n'a pas besoin de comprendre de moyens d'apport de calories. Cela réduit les coûts énergétiques et de l'installation.

L'absence de la deuxième condition prédéterminée comprend l'absence de toutes les caractéristiques de la deuxième condition prédéterminée mais également l'absence partielle d'au moins l'une de ces caractéristiques de la deuxième condition prédéterminée. En effet, l'absence d'une de ces caractéristiques ne permet pas de soumettre complètement les pièces à la deuxième condition. Le deuxième type de colle ne peut donc pas être activé.

L'utilisation des colles des premier et deuxième types permet de simplifier la fabrication des première et deuxième pièces car il n'est pas nécessaire de prévoir, dès la fabrication des première et deuxième pièces, des moyens de solidarisation autres que les colles.

En outre, les colles assurent une très bonne étanchéité entre les première et deuxième pièces, notamment par rapport à des moyens de solidarisation mécaniques.

Le procédé d'assemblage est facilité car il est possible d'utiliser un même moyen de dépose, par exemple un robot, pour munir les première et deuxième pièce des premier et deuxième types de colle. En outre, il est possible de déposer simultanément les premier et deuxième types de colle ce qui réduit le temps d'utilisation de l'installation d'assemblage. De plus, l'utilisation des colles permet d'automatiser complètement le procédé d'assemblage de la pièce contrairement à l'utilisation de moyens de solidarisation mécaniques tels que des vis pour lesquels la présence d'un opérateur est préférable. Cet opérateur ne pouvant intervenir simultanément avec un robot munissant une des première et deuxième pièces avec de la colle pour des raisons de sécurité, l'utilisation de moyens de solidarisation mécaniques tels que des vis rend le procédé d'assemblage relativement long et fastidieux.

Les moyens de solidarisation mécaniques tels que des vis ou des agrafes sont le plus souvent métalliques et donc susceptibles de se corroder. En outre, avec l'usure ou en cas de malfaçon, de tels moyens de solidarisation sont susceptibles de faire du bruit dans la pièce assemblée. De plus, l'utilisation de colles permet de faciliter le recyclage de la pièce assemblée contrairement à l'utilisation de moyens de solidarisation métalliques. Enfin, les colles sont le plus souvent invisibles et ne détériorent pas l'esthétique de la pièce assemblée contrairement à des moyens de solidarisation mécaniques.

L'utilisation d'un adhésif double face impose de retirer un film pelable qui génère des rebuts et est difficile à poser autrement que par un opérateur. En outre, le dépôt de colles est plus facile à mettre en oeuvre que celui d'un adhésif double face, notamment sur des pièces présentant un profil complexe en trois dimensions, la pose de ce dernier nécessitant, de plus, la présence d'un opérateur. Enfin, la finesse du film adhésif requiert une bien meilleure géométrie des pièces pour garantir un espacement adéquat contrairement à l'utilisation de colles dont l'épaisseur du cordon déposé, légèrement écrasé lors de l'assemblage, permet de rattraper des écarts géométriques relativement importants entre les pièces, notamment entre des pièces de grandes dimensions.

Avantageusement, la première condition prédéterminée comprend une exposition des première et deuxième pièces à un environnement ambiant des première et deuxième pièces pendant au moins une première durée d'exposition.

L'environnement ambiant est défini par l'ensemble des conditions ambiantes normales présentes dans le lieu de fabrication de la pièce assemblée. Les conditions ambiantes comprennent notamment une température ambiante, une pression ambiante et une hygrométrie ambiante.

Cette première condition est utilisée dans les cas où la colle du premier type comprend une colle thermoplastique appliquée à chaud ou une colle réticulable à température ambiante, notamment sous l'action de l'humidité de l'air ambiant.

En outre, cette première condition permet d'occuper peu de temps l'installation et donc d'en augmenter la capacité de production.

Dans un mode de réalisation, la deuxième condition prédéterminée comprend un apport de calories par rapport à un environnement ambiant de la pièce assemblée.

L'apport de calories peut s'effectuer par chauffage, notamment par conduction ou par air chaud, ou bien par exposition des pièces assemblées à des rayonnements infrarouge, ultraviolet ou micro-ondes.

Dans un autre mode de réalisation, la deuxième condition prédéterminée comprend une exposition des première et deuxième pièces à un environnement ambiant des première et deuxième pièces pendant au moins une deuxième durée d'exposition.

Dans cet autre mode de réalisation, la deuxième durée d'exposition est supérieure à la première durée d'exposition. En effet, durant la première durée d'exposition, la colle du premier type est activée mais pas la colle du deuxième type qui n'a pas été exposée suffisamment longtemps à l'environnement ambiant.

Une fois extraite de l'installation, les pièces sont maintenues, par exemple, à la température ambiante pendant une durée complémentaire de la première durée d'exposition à l'environnement ambiant, la durée totale d'exposition étant alors égale à la deuxième durée d'exposition. Il est alors inutile de chauffer les pièces ce qui réduit les coûts énergétiques et de l'installation.

Selon d'autres caractéristiques optionnelles du procédé:
- On assemble les première et deuxième pièces dans un support de positionnement d'une des pièces par rapport à l'autre. Un tel support est dépourvu de moyens d'apport de calories, notamment par chauffage.
- La colle du premier type comprenant une colle thermoplastique, on applique à chaud la colle thermoplastique sur au moins l'une des première et deuxième pièces. Dans ce cas, la première condition comprend l'exposition des pièces à la température ambiante sur la première durée d'exposition de façon à permettre à la colle de se solidifier et de figer la géométrie de la pièce assemblée.
- La colle du deuxième type comprenant une colle réticulable, on applique la colle réticulable sur au moins l'une des première et deuxième pièces. Dans ce cas, la deuxième condition comprend l'exposition de la pièce assemblée à la température ambiante sur la deuxième durée d'exposition. Afin d'accélérer la deuxième solidarisation dans le cas d'une colle thermodurcissable, on peut, en variante, exposer la pièce assemblée à une température supérieure à la température ambiante, par exemple en profitant de la température utilisée lors de l'application de peinture sur la pièce assemblée. De préférence, on applique la colle réticulable à froid.
- On munit une seule des première et deuxième pièces, de préférence simultanément, de la colle thermoplastique et de la colle réticulable sous la forme d'un cordon de colle continu ou discontinu.

L'invention sera mieux comprise à la lecture de la description qui va suivre, donnée uniquement à titre d'exemple non limitatif et faite en se référant aux dessins dans lesquels :
- la figure 1 illustre une pièce assemblée selon un premier mode de réalisation de l'invention;
- la figure 2 illustre un agrandissement de la zone Il de la figure 1;
- les figures 3, 4, 5 sont des vues analogues à celle de la figure 2 d'une pièce assemblée respectivement selon des deuxième, troisième et quatrième modes de réalisation;
- la figure 6 est une représentation schématique d'une installation d'assemblage.

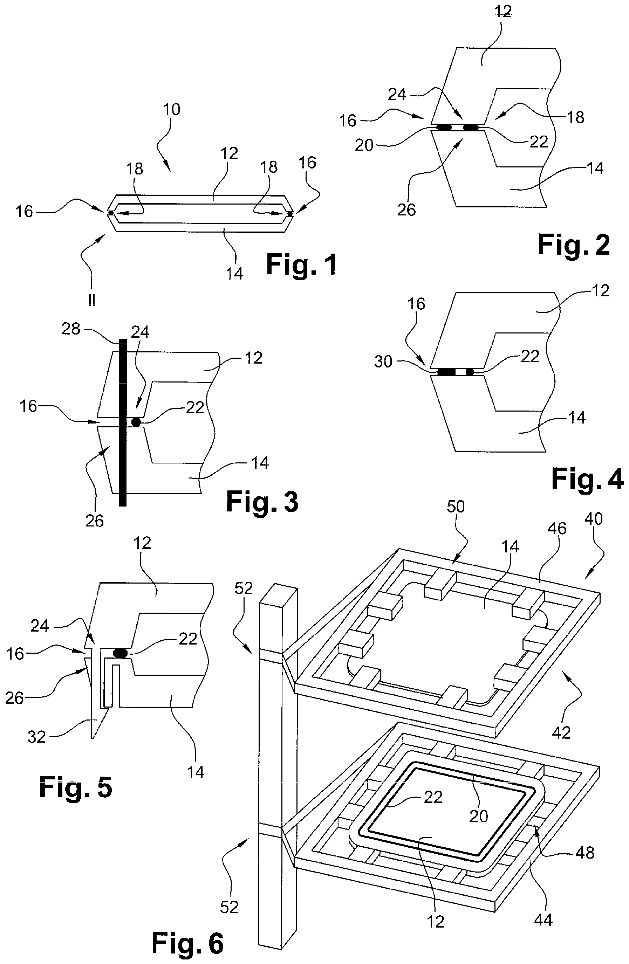

On a représenté sur la figure 1 une pièce assemblée désignée par la référence générale 10. La pièce 10 est une pièce de carrosserie pour véhicule automobile, ici un module arrière. En variante, la pièce 10 est une pièce de structure comme un montant de baie. La pièce 10 pourra également être un pied milieu, un hayon ou encore un becquet.

La pièce assemblée 10 comprend des première et deuxième pièces 12, 14 rapportées et solidarisées l'une par rapport à l'autre. La pièce assemblée 10 comprend également des premiers et deuxièmes moyens 16, 18 de solidarisation des première et deuxième pièces 12, 14 l'une avec l'autre.

En l'espèce, la première pièce 12 est réalisée dans une matière thermoplastique et la deuxième pièce 14 est réalisée dans une matière thermodurcissable. En variante, les pièces 12, 14 sont réalisées indifféremment en métal, dans une matière thermoplastique, dans une matière thermodurcissable. Les pièces 12, 14 peuvent également être des pièces hybrides.

Comme illustré sur la figure 2, les premiers moyens 16 de solidarisation comprennent un cordon 20 d'une colle thermoplastique et les deuxièmes moyens 18 de solidarisation comprennent un cordon 22 d'une colle réticulable, ici une colle thermodurcissable. Les cordons 20, 22 sont répartis sur une zone d'accolement périphérique 24, 26 de chaque pièce 12, 14. En l'espèce, la colle thermoplastique est mono-composante et la colle réticulable est du type polyuréthane bi-composantes. La colle réticulable pourra également être du type epoxy bi-composantes, silicone, acrylique ou polyuréthane mono-composante réticulable à température ambiante sous l'action de l'humidité. En variante, la colle thermoplastique est bi-composantes. Dans une autre variante, les moyens 16 et/ou 18 sont des cordons discontinus de colle répartis sur les zones d'accolement périphériques 24, 26 des pièces 12, 14. Dans une autre variante, les moyens 16 comprennent une colle réticulable, par exemple thermodurcissable.

On a représenté sur les figures 3 à 5 une pièce assemblée 10 selon des deuxième, troisième et quatrième modes de réalisation non revendiqués. Les éléments analogues à ceux représentés sur les figures précédentes sont désignés par des références identiques.

Dans le deuxième mode de réalisation non revendiqué, les premiers moyens 16 de solidarisation comprennent des agrafes 28 réparties sur les zones d'accolement périphériques 24, 26 des pièces 12, 14.

Dans le troisième mode de réalisation non revendiqué, les premiers moyens 16 de solidarisation comprennent un adhésif double face 30.

Dans le quatrième mode de réalisation non revendiqué, les premiers moyens 16 de solidarisation comprennent des clips élastiques 32 répartis sur les zones d'accolement périphérique 24, 26 des pièces 12, 14.

On a représenté sur la figure 6 une installation d'assemblage 40. L'installation 40 comprend un support 42 de positionnement d'une des pièces 12, 14 par rapport à l'autre. Le support 42 comprend une première partie 44 de maintien de la première partie 12 et une deuxième partie 46 de maintien de la deuxième partie 14.

A cet effet, chaque première et deuxième partie 44, 46 comprend des moyens 48, 50 de maintien de chaque pièces 12, 14 répartis sur la circonférence de chaque partie 44, 46 du support 42. En l'espèce, les moyens 48, 50 comprennent des ventouses pneumatiques. En variante, les moyens 48, 50 comprennent des pinces ou encore des moyens électromagnétiques dans le cas où les pièces 12, 14 sont métalliques.

L'installation 40 comprend également des moyens 52 de déplacement de chaque partie 44, 46 l'une par rapport à l'autre entre une position d'écartement dans laquelle les pièces 12, 14 sont positionnées dans le support 42 et une position de solidarisation dans laquelle les pièces 12, 14 sont rapportées l'une à l'autre.

L'installation 40 est dépourvue de moyens d'apport de calories, en l'espèce, de moyens de chauffage par conduction thermique.

On va maintenant décrire un procédé selon l'invention. On positionne tout d'abord chaque pièce 12, 14 respectivement dans les moyens 48, 50. Puis, on munit la première pièce 12 des premiers moyens 16 de solidarisation d'avec l'autre pièce 14. Les moyens 16 sont activés sous l'effet d'au moins une première condition prédéterminée. En l'espèce, on applique à chaud le cordon 20 de colle thermoplastique sur la première pièce 12. De préférence simultanément, on munit également la première pièce 12 des seconds moyens 18 de solidarisation d'avec l'autre pièce 14. Les moyens 18 sont distincts des premiers moyens 16 de solidarisation et sont activés sous l'effet d'au moins une deuxième condition prédéterminée différente de la première condition prédéterminée. En l'espèce, on applique le cordon 22 de colle réticulable sur la première pièce 12, ici à froid. En variante, on munit la deuxième pièce 14 des moyens 18.

Puis, grâce aux moyens 52, on assemble en rapportant et en positionnant les pièces 12, 14 l'une par rapport à l'autre en exposant les pièces 12, 14 à la première condition prédéterminée de façon à définir une position relative des pièces 12, 14 l'une par rapport à l'autre, et en l'absence de la deuxième condition prédéterminée. En l'espèce, la première condition prédéterminée comprend une exposition des pièces 12, 14 à une température ambiante d'un environnement ambiant des pièces 12, 14 pendant au moins une première durée d'exposition comprise entre quelques secondes et quelques minutes.

A l'issue de la première durée, on extrait la pièce assemblée 10 de l'installation 40 et on expose les pièces 12, 14 assemblées à la deuxième condition prédéterminée. En l'espèce, la deuxième condition prédéterminée comprend une exposition des pièces 12, 14 assemblées à la température ambiante de l'environnement ambiant pendant au moins une deuxième durée d'exposition comprise entre quelques minutes et quelques heures. Comme les pièces 12, 14 ont déjà été exposées pendant la première durée d'exposition à la température ambiante, il ne reste plus que la durée correspondante à la différence entre la première et la deuxième durée d'exposition avant que la colle thermodurcissable n'ait complètement réticulé.

En variante, la deuxième condition prédéterminée comprend l'apport de calories. Avantageusement, cet apport de calories se fait lors d'une étape de peinture de la pièce 10 assemblée. Cette étape de peinture est ultérieure à l'étape consistant à assembler les pièces 12, 14 l'une avec l'autre.

L'invention ne se limite pas aux modes de réalisation précédemment décrits.

En effet, on pourra assembler des pièces 12, 14 pré-peintes.

Dans le cas où les moyens de solidarisation 16 comprennent des agrafes 28, les agrafes 28 sont appliquées après que les pièces 12, 14 aient été positionnées et rapportées l'une à l'autre.

Dans le cas où les moyens de solidarisation 16 comprennent des clips 32, les clips sont moulés lors de la fabrication des pièces 12, 14 avant l'assemblage des pièces 12, 14.

## Revendications

1. Procédé d'assemblage d'une pièce assemblée (10) pour véhicule automobile à partir de première et deuxième pièces (12, 14), **caractérisé en ce que**:
- on munit au moins l'une des première et deuxième pièces (12, 14) d'une colle (20) de solidarisation avec l'autre pièce d'un premier type, activée sous l'effet d'au moins une première condition prédéterminée,
- on munit au moins l'une des première et deuxième pièces (12, 14) d'une colle (22) de solidarisation avec l'autre pièce d'un second type, distincte de la colle du premier type, et activée sous l'effet d'au moins une deuxième condition prédéterminée différente de la première condition prédéterminée,
- puis, on assemble les première et deuxième pièces (12, 14) grâce à la colle (20) du premier type en exposant les première et deuxième pièces (12, 14) à la première condition prédéterminée de façon à définir une position relative des première et deuxième pièces (12, 14) l'une par rapport à l'autre dans la pièce assemblée (10), et en l'absence de la deuxième condition prédéterminée, et
- on expose les première et deuxième pièces (12, 14) assemblées à la deuxième condition prédéterminée.

2. Procédé selon la revendication 1, dans lequel la première condition prédéterminée comprend une exposition des première et deuxième pièces (12, 14) à un environnement ambiant des première et deuxième pièces (12, 14) pendant au moins une première durée d'exposition.

3. Procédé selon la revendication 1 ou 2, dans lequel la deuxième condition prédéterminée comprend un apport de calories par rapport à un environnement ambiant de la pièce assemblée (10).

4. Procédé selon la revendication 1 ou 2, dans lequel la deuxième condition prédéterminée comprend une exposition des première et deuxième pièces (12, 14) à un environnement ambiant des première et deuxième pièces (12, 14) pendant au moins une deuxième durée d'exposition.

5. Procédé selon l'une quelconque des revendications précédentes, dans lequel on assemble les première et deuxième pièces (12, 14) l'une par rapport à l'autre dans un support (42) de positionnement d'une des pièces (12, 14) par rapport à l'autre.

6. Procédé selon l'une quelconque des revendications précédentes, dans lequel la colle (20) du premier type comprenant une colle thermoplastique, on applique à chaud la colle thermoplastique sur au moins l'une des première et deuxième pièces (12, 14).

7. Procédé selon l'une quelconque des revendications précédentes, dans lequel la colle (22) du deuxième type comprenant une colle réticulable, on applique la colle réticulable sur au moins l'une des première et deuxième pièces (12, 14).

8. Procédé selon la revendications 6 et 7 prises ensemble, dans lequel on munit une seule des première et deuxième pièces (12, 14), de préférence simultanément, de la colle thermoplastique et de la colle réticulable sous la forme d'un cordon (20, 22) de colle continu ou discontinu.

## Patentansprüche

1. Verfahren zum Zusammenfügen eines Fügeteils (10) für ein Kraftfahrzeug aus einem ersten und einem zweiten Teil (12, 14), **dadurch gekennzeichnet, dass**
- mindestens das eine des ersten und zweiten Teils (12, 14) mit einem Klebstoff (20) zum festen Verbinden mit dem anderen Teil eines ersten Typs versehen wird, der unter der Wirkung mindestens einer ersten vorbestimmten Bedingung aktiviert wird,
- mindestens das eine des ersten und zweiten Teils (12, 14) mit einem Klebstoff (22) zum festen Verbinden mit dem anderen Teil eines zweiten Typs versehen wird, der von dem Klebstoff des ersten Typs verschieden ist und unter der Wirkung mindestens einer zweiten vorbestimmten Bedingung, die von der ersten vorbestimmten Bedingung verschieden ist, aktiviert wird,
- dann das erste und zweite Teil (12, 14) mit Hilfe des Klebstoffs (20) des ersten Typs zusammengefügt werden, indem das erste und zweite Teil (12, 14) der ersten vorbestimmten Bedingung ausgesetzt werden, so dass eine relative Position des ersten und zweiten Teils (12, 14) in dem Fügeteil (10) relativ zueinander festgelegt wird, und in Abwesenheit der zweiten vorbestimmten Bedingung, und
- die zusammengefügten Teile, das erste und zweite (12, 14), der zweiten vorbestimmten Bedingung ausgesetzt werden.

2. Verfahren nach Anspruch 1, bei dem die erste vorbestimmte Bedingung ein Aussetzen des ersten und zweiten Teils (12, 14) einer Umgebung des ersten und zweiten Teils (12, 14) während mindestens einer ersten Aussetzungsdauer umfasst.

3. Verfahren nach Anspruch 1 oder 2, bei dem die zweite vorbestimmte Bedingung ein Zuführen von Wärme gegenüber einer umliegenden Umgebung des Fügeteils (10) umfasst.

4. Verfahren nach Anspruch 1 oder 2, bei dem die zweite vorbestimmte Bedingung ein Aussetzen des ersten und zweiten Teils (12, 14) einer umliegenden Umgebung des ersten und zweiten Teils (12, 14) während mindestens einer zweiten Aussetzungsdauer umfasst.

5. Verfahren nach einem der vorhergehenden Ansprüche, bei dem das erste und zweite Teil (12, 14) relativ zueinander in einer Halterung (42) zur Positionierung eines der Teile (12, 14) relativ zu dem anderen zusammengefügt werden.

6. Verfahren nach einem der vorhergehenden Ansprüche, bei dem, da der Klebstoff (20) des ersten Typs einen thermoplastischen Klebstoff enthält, der thermoplastische Klebstoff auf mindestens das eine des ersten und zweiten Teils (12, 14) heiß aufgetragen wird.

7. Verfahren nach einem der vorhergehenden Ansprüche, bei dem, da der Klebstoff (22) des zweiten Typs einen vernetzbaren Klebstoff enthält, der vernetzbare Klebstoff auf mindestens das eine des ersten und zweiten Teils (12, 14) aufgetragen wird.

8. Verfahren nach Anspruch 6 und 7 zusammen, bei dem nur eines des ersten und zweiten Teils (12, 14), vorzugsweise gleichzeitig, mit dem thermoplastischen Klebstoff und dem vernetzbaren Klebstoff in Form eines durchgängigen oder nicht durchgängigen Klebstoffstrangs (20, 22) versehen wird.

## Claims

1. A method of assembling an assembled part (10) for motor vehicle that is assembled from first and second parts (12, 14), **characterized in that** the method comprising the steps of:
• providing at least one of the first and second (12, 14) parts with an adhesive (20) for bonding with the other part, the adhesive being of a first type that is activated under the effect of at least one first predetermined condition;
• providing at least one of the first and second (12, 14) parts with an adhesive (22) for bonding with the other part, the adhesive being of a second type, distinct from the adhesive of the first type, and being activated under the effect of at least one second predetermined condition that is different from the first predetermined condition;
• then assembling the first and second (12, 14) parts together by means of the adhesive (20) of the first type, exposing the first and second (12, 14) parts to the first predetermined condition so as to define a mutual relative position for the first and second (12, 14) parts in the assembled part (10), and in the absence of the second predetermined condition; and
• exposing the assembled-together first and second (12, 14) parts to the second predetermined condition.

2. A method according to claim 1, wherein the first predetermined condition comprises exposing the first and second (12, 14) parts to an ambient environment of the first and second (12, 14) parts during at least a first exposure duration.

3. A method according to claim 1 or 2, wherein the second predetermined condition corresponds to delivering heat relative to an ambient environment of the assembled part.

4. A method according to claim 1 or 2, wherein the second predetermined condition comprises exposing the first and second (12, 14) parts to an ambient environment of the first and second (12, 14) parts during at least a second exposure duration.

5. A method according to one of the preceding claims, wherein the first and second (12, 14) parts are assembled together in a positioning support (42) for positioning one of the parts (12, 14) relative to the other.

6. A method according to one of the preceding claims, wherein the adhesive (20) of the first type comprises a thermoplastic adhesive, and the thermoplastic adhesive is applied hot to at least one of the first and second (12, 14) parts.

7. A method according to one of the preceding claims, wherein the adhesive (22) of the second type comprises a curable adhesive, and the curable adhesive is applied to at least one of the first and second (12, 14) parts.

8. A method according to claim 6 an d7, wherein a single one of the first and second (12, 14) parts is provided, preferably simultaneously, with both the thermoplastic adhesive and the curable adhesive, each in the form of a bead (20, 22) of adhesive that is continuous or discontinuous.
